# FASCICULE DE BREVET EUROPEEN

(11) **EP 3 959 139 B1**
(45) Date de publication et mention de la délivrance du brevet: **08.01.2025**
(21) Numéro de dépôt: 20728101.5
(22) Date de dépôt: 23.04.2020
(51) Int. Cl.: B64D 47/00

(54) **RÉSEAU D'ALIMENTATION EN ÉNERGIE ÉLECTRIQUE POUR AÉRONEF**
ERZEUGERNETZWERK FÜR ELEKTRISCHE ENERGIE FÜR EIN FLUGZEUG
ELECTRIC POWER GENERATION NETWORK FOR AIRCRAFT

(30) Priorité: 25.04.2019 FR 1904407
(43) Date de publication de la demande: 02.03.2022
(73) Titulaire: Safran Helicopter Engines, 64510 Bordes (FR)
(72) Inventeur: BARRACO, Thomas, 77550 MOISSY-CRAMAYEL (FR); KLONOWSKI,, Thomas, 77550 MOISSY-CRAMAYEL (FR); POUMAREDE, Vincent, 77550 MOISSY-CRAMAYEL (FR)
(74) Mandataire: Gevers & Orès
(86) Numéro de dépôt international: PCT/FR2020/000148
(87) Numéro de publication internationale: WO 2020/217007

(56) Documents cités:
- EP-A1- 2 192 681
- WO-A1-2009/052843
- WO-A1-2017/140706
- US-A1- 2015 102 663

## Description

### Domaine technique de l'invention

La présente invention concerne le domaine de l'alimentation électrique d'un aéronef. Elle se rapporte à un réseau d'alimentation en énergie électrique d'un aéronef muni d'une pluralité de charges électriques à alimenter.

La présente invention s'inscrit notamment dans le cadre d'architectures électriques intégrant des sources de puissance comprenant une turbine à gaz associée à une génératrice formant un turbogénérateur, et des charges ou consommateurs d'énergie électrique tels que des propulseurs électriques.

La présente invention ne vise pas d'aéronef particulier et peut être appliquée aussi bien à des aéronefs à voilure fixe qu'à des aéronefs à voilure tournante de type hélicoptère ou multicoptère.

### Arrière-plan technique

L'état de la technique comprend notamment les documents WO-A1-2017/140706, US-A1-2015/102663, WO-A1-2009/052843, EP-A1-2 192 681. De manière connue, la propulsion des aéronefs se fait par le biais de turbines à gaz couplées mécaniquement à des éléments propulsifs, notamment une soufflante (fan en anglais) pour un turboréacteur double flux moderne, une hélice pour un turbopropulseur ou un rotor pour les turbomoteurs, particulièrement pour des turbomoteurs d'hélicoptère.

Il est connu de prévoir de coupler une turbomachine avec un générateur de courant électrique et un moteur électrique pour l'entraînement d'un propulseur formant ainsi un système propulsif.

Ainsi, il a été proposé un système propulsif à courant continu présentant un redresseur en sortie d'une génératrice à courant alternatif suivi d'un onduleur en entrée d'un moteur électrique, afin de délivrer en sortie de l'onduleur un courant alternatif pour l'alimentation électrique du moteur électrique.

Pour une telle architecture électrique, le nombre de sources de puissance énergétiques et de charges électriques à alimenter est connu, de sorte que la principale fonction d'un tel réseau d'alimentation électrique est de garantir le niveau de tension adéquat sur le réseau d'alimentation électrique par exemple à Courant Continu Haute Tension (CCHT ou HVDC pour *High Voltage Direct Current* en langue anglaise) et de fournir la puissance nécessaire quelle que soit la demande des charges électriques à alimenter.

Il est connu dans les architectures de l'art antérieur que les sources de puissance soient connectées sur un bus de distribution de sorte à isoler les défaillances d'une source de puissance énergétique et ainsi éviter que la perte d'une source de puissance énergétique du réseau d'alimentation électrique n'entraine pas une perte totale du réseau, ce qui serait très dommageable.

Un inconvénient majeur de ces réseaux dans lesquels toutes les sources de puissance sont connectées sur un seul bus de distribution est qu'en revanche, la survenance d'une défaillance entrainant la perte du bus de distribution lui-même a pour conséquence de rendre indisponible les charges électriques qu'il alimente en énergie, notamment les moteurs électriques de propulsion, ce qui peut être néfaste pour la sécurité de vol de l'aéronef.

Il a donc été proposé de segmenter le réseau d'alimentation électrique et de répartir les sources de puissance et les charges électriques à alimenter sur une pluralité de bus de distribution. Par exemple, le réseau de distribution proposé par le document WO-A1-2017/140706 comprend une pluralité de génératrices adaptées pour fournir une source d'énergie électrique comprenant, chacune, un stator associé à un redresseur, les stators des génératrices étant connectés à au moins deux bus de distribution agencés pour alimenter la pluralité de charges électriques, le réseau d'alimentation comprenant des contacteurs adaptés pour connecter ou déconnecter électriquement les bus de distribution l'un de l'autre par secteurs.

Par exemple alternatif, pour des architectures électriques d'aéronef de type VTOL (acronyme de *Vertical Take Off and Landing* en langue anglaise) il a été proposé de brancher chaque stator et chaque redresseur d'une machine électrique sur un bus de distribution distinct, autrement dit, le réseau d'alimentation électrique comporte autant de bus de distribution indépendants que de redresseurs.

Une telle architecture permet de ségréguer les charges, c'est-à-dire qu'un actionneur donné est alimenté par deux bus de distribution distincts, la puissance sur un bus de distribution donné étant ainsi fournie par un redresseur et une batterie.

Cependant, bien que cette architecture électrique permette de ségréguer les sources de puissance afin de remédier à la perte d'un bus de distribution, elle impose l'utilisation d'un nombre élevé de batteries (notamment elle nécessite autant de batterie que de bus de distribution présents sur le réseau) ce qui augmente sa masse et son coût, et l'intérêt de l'hybridation se trouve amoindri.

La présente invention est une solution simple et efficace permettant de remédier à ces inconvénients.

### Résumé de l'invention

A cet effet, l'invention concerne un réseau d'alimentation en énergie électrique d'un aéronef muni d'une pluralité de charges électriques à alimenter, ledit réseau d'alimentation comprenant au moins deux génératrices configurées pour faire partie d'un turbogénérateur de l'aéronef et adaptées pour fournir une source d'énergie électrique comprenant, chacune, deux stators, chaque stator étant associé à un redresseur, les stators des génératrices étant connectés à au moins deux bus de distribution agencés pour alimenter la pluralité de charges électriques, le réseau d'alimentation comprenant des contacteurs adaptés pour connecter ou déconnecter électriquement les bus de distribution l'un de l'autre, les redresseurs des génératrices étant montés en alternance sur les bus de distribution.

Le réseau électrique selon l'invention présente l'avantage de pouvoir segmenter et répartir les charges électriques à alimenter et les sources d'énergie électrique afin de prémunir le réseau électrique d'un risque de défaillance en cas de défaut sur un bus de distribution.

Selon un premier exemple de réalisation, par défaut, les contacteurs sont configurés pour connecter électriquement les bus de distribution.

Ainsi, il est possible de multiplier le nombre de sources d'énergie électrique pouvant alimenter les charges électriques à alimenter, le réseau électrique étant alors plus tolérant à la perte d'une ou de plusieurs sources d'énergie électrique.

Selon un second exemple de réalisation, par défaut, les contacteurs sont configurés pour déconnecter électriquement les bus de distribution.

Ainsi, en cas de défaut sur un bus de distribution, ce dernier est isolé du reste du réseau d'alimentation électrique, ce dernier étant en partie préservé et capable d'alimenter une partie des charges électriques non concernées par la défaillance du bus de distribution. En effet, pour une application de type VTOL, les ensembles propulsifs sont constitués de machines électrique double étoile entrainant mécaniquement une hélice. Chaque étoile associée à son onduleur est connectée à un bus HVDC distinct. Ainsi, la mise en défaut d'un bus HVDC n'entraine pas la perte d'un ensemble propulsif.

Avantageusement, des moyens de stockage d'énergie sont également connectés sur les bus de distribution.

Ces moyens de stockage d'énergie participent à la génération et à la stabilisation du réseau d'alimentation électrique en fournissant un surplus d'énergie obtenu par une hybridation de l'alimentation électrique des charges électriques à alimenter et notamment des moteurs électriques.

De préférence et avantageusement, les moyens de stockage d'énergie sont des batteries associées à des convertisseurs de courant continu en courant continu (connus sous l'acronyme DC/DC, de l'anglais « Direct Current/Direct Current »).

Ainsi, un tel convertisseur DC/DC disposé entre la batterie et le réseau électrique à courant continu permet de stabiliser le réseau électrique. L'ajout d'un tel convertisseur a aussi l'avantage de parfaitement contrôler, et donc de protéger, le courant fourni ou absorbé par la batterie Avantageusement, les redresseurs de chaque génératrice comprennent des contacteurs au niveau de leur entrée et de leur sortie.

Ainsi, il est possible de déconnecter électriquement un redresseur défaillant du bus de distribution sur lequel il est monté et de l'isoler du reste du réseau.

Avantageusement, le réseau d'alimentation comporte encore des contacteurs au niveau de chaque charge électrique à alimenter et de chaque stockeur d'énergie.

Ainsi, il est possible de déconnecter électriquement une charge électrique ou un stockeur d'énergie défaillant du bus de distribution sur lequel ils sont montés et de les isoler du reste du réseau.

Avantageusement, le réseau électrique comprend une unité de commande centralisée par génératrice associée à son stockeur d'énergie.

Ainsi, dans le cas où les contacteurs sont naturellement ouverts, la dynamique d'une commande centralisée du réseau électrique permet une bonne gestion du besoin en puissance et de la stabilisation en tension des bus de distribution tout en augmentant l'efficacité énergétique de l'ensemble des sources. La commande centralisée a aussi un avantage lors de la fermeture des contacteurs, puisqu'il est possible d'imposer sur les deux bus HVDC une tension voisine, afin de limiter le pic de courant dû un équilibrage des énergies électrostatique des deux bus.

Au contraire, une commande décentralisée ne permet pas d'avoir une dynamique de contrôle élevée et une optimisation du rendement élevée. En revanche, son principal avantage repose dans la situation où les contacteurs sont naturellement fermés. La séparation des deux bus HVDC n'empêche pas de continuer de réguler la tension de bus, puisque tous les redresseurs travaillent individuellement.

L'invention concerne encore une turbogénérateur d'aéronef caractérisé en ce qu'il est équipé d'un réseau d'alimentation présentant l'une quelconque des caractéristiques susmentionnées.

Ainsi, un turbogénérateur équipé d'un tel réseau électrique permet de garantir l'alimentation en énergie électrique des charges électriques du réseau tout en donnant la possibilité d'isoler une partie du réseau qui serait concerné par une défaillance.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] La figure 1 illustre un exemple de réseau d'alimentation électrique illustratif non couvert par les revendications mais inclus pour faciliter la compréhension de l'invention, comprenant deux génératrices comportant chacune trois stators montés en parallèles sur deux bus de distribution ;
[Fig. 2] La figure 2 illustre un autre exemple de réseau d'alimentation électrique illustratif non couvert par les revendications, comprenant deux génératrices comportant chacune deux stators montés en parallèles sur deux bus de distribution ;
[Fig. 3] La figure 3 illustre un réseau d'alimentation analogue à celui de la figure 2, dans lequel, selon, l'invention, les redresseurs des génératrices sont croisés sur les bus de distribution ; et
[Fig. 4] La figure 4 illustre un exemple de réalisation du réseau d'alimentation électrique selon l'invention comprenant des inductances et des résistances entre deux bus de distribution.

### Description détaillée de l'invention

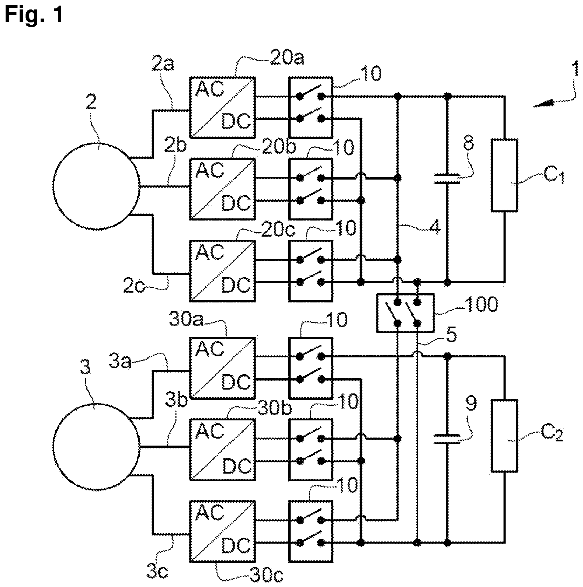

En références aux figures 1 à 3, la présente invention concerne un réseau 1 d'alimentation en énergie électrique d'un aéronef comprenant une pluralité de charges électriques C1, C2, C3, C4 à alimenter. Ces charges électriques sont par exemple des moteurs électriques associés à des onduleurs et entraînant, chacun, un propulseur.

Ce réseau électrique 1 comprend une turbine à gaz d'aéronef (non représentée) connectée mécaniquement à deux génératrices 2, 3 formant ainsi un ensemble turbogénérateur. Toutefois, le réseau électrique 1 pourrait comporter plus de deux génératrices.

Dans l'exemple illustratif de la figure 1, la génératrice 2 est une génératrice dite « triple étoile » ou neuf phases, autrement dit elle comprend trois chaînes électriques 2a, 2b, 2c reliées à des charges électriques C1, C2 à alimenter. Chaque chaine électrique 2a, 2b, 2c comprend un stator (non représenté) intégrant un jeu de bobines formant un élément polyphasé en sortie, et un redresseur 20a, 20b, 20c.

De même, la génératrice 3 est une génératrice et comprend trois chaînes électriques 3a, 3b, 3c reliées à des charges électriques C1, C2 à alimenter. Chaque chaine électrique 3a, 3b, 3c comprend un stator (non représenté) et un redresseur 30a, 30b, 30c.

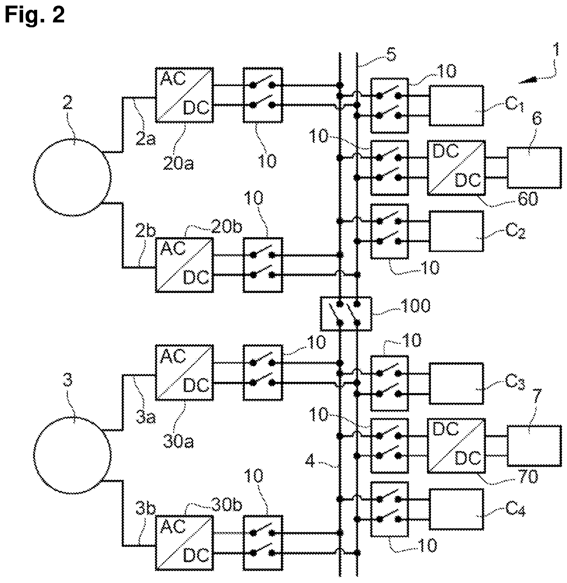

Chaque génératrice 2, 3, pourrait toutefois, comme exemple illustratif non couvert par les revendications, ne comporter qu'un seul stator, et par conséquent qu'une seule chaine électrique, la génératrice étant alors appelée « simple étoile », ou deux stators comme illustré aux figures 2 et, selon l'invention, 3, connu sous le nom de génératrice « double étoile ».

Les charges électriques C1, C2, C3, C4 sont raccordées aux génératrices 2, 3 par l'intermédiaire de deux bus de distribution 4, 5 de courant continu, ce qui n'est pas limitatif. Les charges électriques C1, C2, C3, C4 peuvent être des charges passives ou actives, tels que des convertisseurs avec régulation, par exemple un onduleur et un moteur triphasé. Pour des raisons de sécurité, le nombre de bus de distribution est au moins égal à deux. En effet, un but de la présente invention est de pouvoir isoler une défaillance qui surviendrait sur un bus de distribution afin d'éviter que cette défaillance se propage à l'ensemble du réseau d'alimentation électrique 1.

Toutefois, le nombre de bus de distribution peut être plus élevé, et, au maximum être égal au nombre de redresseur. Pour des questions de poids et de coût, il est préférable de minimiser le nombre de bus HVDC, idéalement autant que de génératrices.

Les chaines électriques 2a, 2b, 2c et 3a, 3b, 3c, et par conséquent leurs stators et redresseurs 20a, 20b, 20c, 30a, 30b, 30c respectifs, sont montés en parallèle sur les bus de distribution 4, 5.

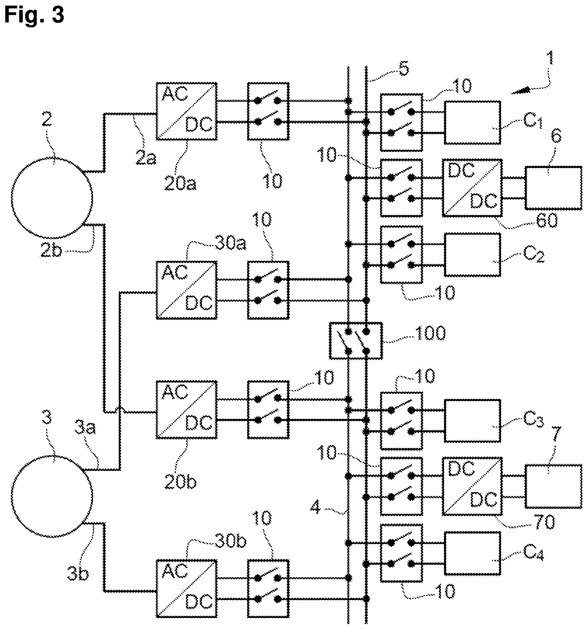

Comme cela est visible sur la figure 3, selon l'invention les redresseurs 20a, 20b et 30a, 30b des génératrices 2, 3 respectivement, sont montés en alternance sur les bus de distribution 4, 5. Autrement dit, les redresseurs 20a, 20b et 30a, 30b des génératrices 2, 3 sont croisés sur les bus 4, 5. Dans le cas où les bus HVDC sont isolés, cette configuration à l'avantage de ne pas faire perdre toute la génération issue de la turbine sur un bus. Cela permet de minimiser la puissance que doit fournir la batterie.

Plus particulièrement et avantageusement, le nombre de bus de distribution du réseau d'alimentation électrique selon l'invention est égal au nombre de ségrégation de charges électriques désiré. Ainsi, dans les exemples illustrés, nullement limitatifs, les charges C1, C2, C3, C4 sont ségréguées en deux ensembles répartis sur les deux bus distribution 4, 5.

En référence aux figures 2 et 3, le réseau d'alimentation électrique comprend encore des moyens de stockage d'énergie montés sur les bus de distribution 4, 5. Ces moyens de stockage d'énergie sont par exemple des batteries électriques 6, 7. Les moyens de stockage d'énergie peuvent être réalisés cependant autrement que sous la forme de batteries et peuvent être, par exemple, des piles thermiques ou des super-condensateurs. De tels moyens de stockage d'énergie permettent notamment de compléter temporairement un besoin en puissance, notamment au démarrage de l'ensemble turbogénérateur ou lors d'une manœuvre en vol brusque nécessitant de la puissance avec un temps de réponse très court.

Afin d'améliorer le réseau d'alimentation 1 en garantissant une stabilité du réseau d'alimentation électrique 1 et en assurant la disponibilité permanente de la possibilité d'hybridation du réseau d'alimentation électrique 1, il est avantageusement prévu d'associer à chaque batterie 6, 7, un convertisseur DC/DC 60, 70, disposé entre chaque batterie 6, 7 et le réseau électrique à courant continu.

Le réseau d'alimentation électrique 1 comprend encore une pluralité de contacteurs 10 associés aux différents éléments montés sur le réseau d'alimentation électrique 1 et permettant de connecter ou de déconnecter ces éléments des bus de distribution 4, 5 auxquels ils sont raccordés et de les isoler lorsqu'ils sont défaillants afin d'éviter qu'un tel défaut, tel un court-circuit, ne se propage à l'ensemble du réseau d'alimentation électrique 1.

Ainsi, chaque redresseur 20a, 20b, 20c, 30a, 30b, 30c peut être déconnecté des bus de distribution 4, 5 au moyen de contacteurs 10, au niveau de leur entrée AC ou de leur sortie DC.

De même, chaque charge électrique C1, C2, C3, C4 à alimenter et chaque batterie 6, 7, par l'intermédiaire de leur onduleur respectif 60, 70 le cas échéant, peuvent être déconnectées des bus de distribution 4, 5 au moyens de contacteurs 10.

Le réseau d'alimentation électrique 1 selon l'invention est notamment remarquable en ce qu'il comprend des contacteurs 100 adaptés pour connecter ou déconnecter électriquement les bus de distribution 4, 5 l'un de l'autre, autrement dit soit les bus de distribution 4, 5 sont reliés entre eux, soit ils sont isolés l'un de l'autre.

Selon un premier mode de réalisation, les contacteurs 100 sont configurés pour, par défaut, connecter électriquement les bus de distribution 4, 5 l'un à l'autre.

Ce premier mode de réalisation présente l'avantage intéressant de pouvoir multiplier les sources d'énergie pouvant alimenter les charges électriques du réseau d'alimentation électrique 1. En effet, les différentes génératrices 2, 3 et les différentes batteries 6, 7 du réseau 1 étant ainsi mutualisées, l'ensemble du réseau 1 peut palier une perte d'une ou plusieurs sources d'énergie et continuer à alimenter, en partie, les charges C1, C2, C3, C4.

Lorsque les bus de distribution 4, 5 sont ainsi liés, il est possible, par l'intermédiaire des contacteurs 100, de les déconnecter en cas de défaillance tel qu'un court-circuit sur l'un des bus 4, 5 de sorte à éviter qu'une telle défaillance ne se propage à l'ensemble du réseau.

En partant de cet état initial dans lequel les bus de distribution 4, 5 sont connectés, autrement dit un étant dans lequel les contacteurs 100 sont dans un état fermé, si un défaut se produit sur l'un des bus 4, 5 nécessitant une déconnexion, par exemple si un court-circuit est détecté sur l'un des bus, les contacteurs 100 sont configurés de sorte à pouvoir commuter dans un état ouvert, sous un courant de court-circuit. Les contacteurs 100 sont alors assimilés à des éléments de déconnexion.

L'utilisation de tous ces contacteurs 10, 100, bien qu'intéressante afin de protéger l'ensemble du réseau d'alimentation électrique 1, peut alourdir le réseau 1, ce qui n'est pas recherché.

Ainsi, un exemple de réalisation intéressant mais nullement limitatif est que les contacteurs 100 comprennent des éléments « pyrofuses », à savoir des sections conductrices configurées pour fondre lorsqu'une température trop élevée est atteinte dans le câble, correspondant à un courant trop important traversant le câble.

Selon un second mode de réalisation, les contacteurs 100 sont configurés pour, par défaut, déconnecter électriquement les bus de distribution 4, 5 l'un à l'autre.

Ce second mode de réalisation présente l'avantage intéressant de pouvoir, par défaut, favoriser la protection de l'ensemble du réseau 1. Les bus de distribution 4, 5 ainsi séparés, autrement dit isolés l'un de l'autre, il est possible, en cas de défaut sur l'un des bus 4, 5, tel qu'un court-circuit, de ne pas perdre l'ensemble du réseau d'alimentation électrique 1. Par conséquent, dans le cas où un court-circuit interviendrait sur l'un des bus 4, 5, une partie des charges électriques C1, C2, C3, C4 continueraient à être alimentée.

Lorsque les bus de distribution 4, 5 sont ainsi isolés l'un de l'autre, il est possible et aisé, par l'intermédiaire des contacteurs 100, de les connecter en cas de besoin ponctuel en énergie électrique supplémentaire sur une partie du réseau 1

En partant de cet état initial dans lequel les bus de distribution 4, 5 sont déconnectés, autrement dit un étant dans lequel les contacteurs 100 sont dans un état ouvert, si par exemple l'une des batteries 6, 7 ne permet pas de fournir l'énergie électrique nécessaire pour alimenter une partie des charges électriques C1, C2, C3, C4 du réseau 1, les contacteurs 100 sont configurés de sorte à pouvoir commuter dans un état fermé, afin de faire bénéficier à la partie du réseau présentant ce besoin ponctuel en énergie électrique d'une autre source d'alimentation en énergie électrique.

La présente invention procure ainsi de nombreux avantages. Elle permet de ségréguer le réseau d'alimentation électrique 1 permettant ainsi d'éviter qu'un bus de distribution 4, 5 soit une cause de défaillance de l'ensemble du réseau. De plus, la possibilité de pouvoir connecter ou déconnecter les bus 4, 5 à l'état initial ou lors de la survenance d'un défaut ou d'un besoin permet une simplicité dans la régulation de l'ensemble du réseau d'alimentation électrique 1.

Avantageusement, le réseau d'alimentation électrique 1 comprend une unité de commande (non représentée) des génératrices 2, 3 et des batteries 6, 7, qui peut être soit décentralisée, soit centralisée.

Dans le cas où l'unité de commande est décentralisée, les sources d'énergie électrique, à savoir les génératrices 2, 3 et les batteries 6, 7 participent de façon indépendante à l'alimentation du réseau d'alimentation électrique 1.

Partant d'un étant initial dans lequel les contacteurs 100 sont fermés de sorte à connecter les bus de distribution 4, 5, une déconnexion des bus 4, 5 (autrement dit, l'ouverture des contacteurs 100) est transparente pour l'unité de commande, de sorte qu'aucune reconfiguration de la commande n'est nécessaire.

Cependant, les charges électriques C1, C2, C3, C4 comme des moteurs électriques entraînant des propulseurs d'un aéronef non affectées par cette déconnexion doivent compenser le besoin en puissance énergétique. En effet, la détection d'une défaillance tel un court-circuit entraine donc un changement de consigne de fonctionnement des charges électriques C1, C2, C3, C4, à savoir des moteurs électriques alimentant des propulseurs, afin de maintenir une dynamique de vol de l'aéronef. En parallèle, il est nécessaire d'adapter une consigne de la puissance énergétique fournie par la turbine à gaz aux génératrices 2, 3 doit être adaptée. Les batteries 6, 7 sont nécessaires pour intervenir lors du transitoire de puissance car la dynamique de la turbine ne permet pas de suivre la dynamique électrique des moteurs.

Dans le cas où les bus de distribution 4, 5 sont initialement déconnectés, la perte d'une ou plusieurs sources d'énergie électrique nécessite la fermeture des contacteurs 100 pour obtenir une connexion des bus de distribution 4, 5 afin de mutualiser les différentes sources d'énergie (génératrices 2, 3 et batteries 6, 7) sur l'ensemble du réseau 1 et de garantir le besoin en puissance des charges électrique C1, C2, C3, C4 à alimenter.

Cependant, lorsque les bus de distribution 4, 5 sont initialement déconnectés et que l'on souhaite les connecter, il est opportun qu'un niveau de tension entre les bus de distribution 4, 5 soit sensiblement équivalent. En effet, lors de la connexion des bus 4, 5, si une différence de tension est présente entre les bus 4, 5, cela peut créer un pic de courant lors d'un rééquilibrage de ces tensions. Ce pic de courant, s'il est peu important, par exemple de l'ordre de quelques dizaines d'ampères, peut être absorbé par le réseau 1, en revanche, s'il est trop élevé, par exemple de l'ordre de plusieurs centaines d'ampères, le pic de courant ne peut alors être absorbé ce qui peut être dommageable pour l'ensemble du réseau électrique 1.

Or, avec une telle unité de commande décentralisée, les niveaux de tension des bus de distribution 4, 5 du réseau 1 n'étant pas connus, le risque de survenance d'un pic de courant lors de la connexion des bus 4, 5 est élevé. Ce pic de courant est dû au rééquilibrage des tensions des deux condensateurs, ce courant est limité uniquement par les impédances des sections conductrices.

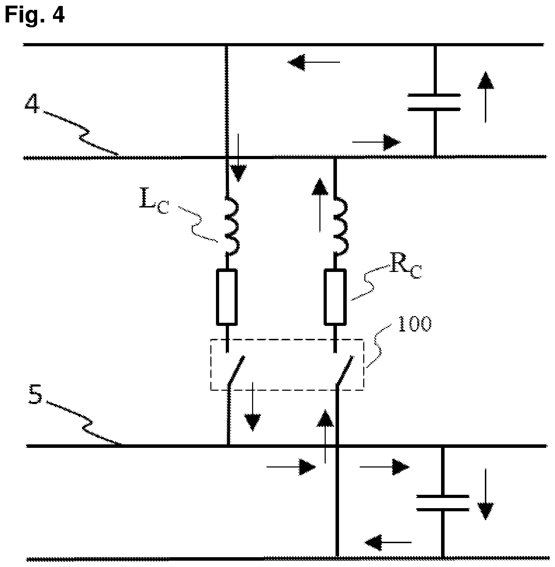

De même, un tel pic de courant peut en partie être absorbé par les batteries 6, 7. De la même manière, l'utilisation de super-capacités 8, 9 sur le réseau permet de mieux absorber le pic de courant, mais cela ne change pas le caractère nuisible des pics de courant et leur capacité à détériorer les composants. L'ajout d'inductances Lc et de résistances Rc entre les deux bus HVDC 4, 5, comme illustré sur la figure 4, permet de limiter en transitoire les variations du courant et de dissiper une partie de ce courant sous forme de chaleur.

Toutefois, il est nécessaire de pouvoir égaliser les première et deuxième tension des bus de distribution 4, 5, ou au moins avoir des tensions voisines, avant de les connecter.

Ainsi, selon un second mode de réalisation de l'invention, l'unité de commande est centralisée, autrement dit il est possible d'intervenir sur les sources d'énergie électrique du réseau 1 afin d'en réguler les besoins en puissance énergétique.

Une telle unité de commande centralisée comprend des moyens de mesure, d'une part, d'une première tension dans un premier des bus de distribution 4, 5 et, d'autre part, d'une deuxième tension dans un second des bus de distribution 4, 5. L'unité de commande centralisée comprend encore des moyens de pilotage des convertisseurs 60, 70 configurés pour faire varier la première tension et la deuxième tension.

L'unité de commande centralisée présente l'avantage intéressant de pouvoir agir directement sur les convertisseurs 60, 70 de sorte à faire varier les tensions des bus de distribution 4, 5 afin que la première tension et la deuxième tension soient sensiblement égales. Ainsi, le risque d'avoir un pic de courant à la connexion des bus de distribution 4, 5 est alors éliminé.

## Revendications

1. Réseau (1) d'alimentation en énergie électrique d'un aéronef muni d'une pluralité de charges électriques (C1, C2, C3, C4) à alimenter, ledit réseau (1) d'alimentation comprenant au moins deux génératrices (2, 3) configurées pour faire partie d'un turbogénérateur de l'aéronef et adaptées pour fournir une source d'énergie électrique comprenant, chacune, deux stators, chaque stator étant associé à un redresseur (20a, 20b, 20c ; 30a, 30b, 30c), les stators des génératrices (2, 3) étant connectés à au moins deux bus de distribution (4, 5) agencés pour alimenter la pluralité de charges électriques (C1, C2, C3, C4), le réseau d'alimentation comprenant des contacteurs (100) adaptés pour connecter ou déconnecter électriquement les bus de distribution (4, 5) l'un de l'autre, les redresseurs (20a, 20b, 20c ; 30a, 30b, 30c) des génératrices (2, 3) étant montés en alternance sur les bus (4, 5) de distribution.

2. Réseau (1) d'alimentation selon la revendication 1, **caractérisé en ce que**, par défaut, les contacteurs (100) sont configurés pour connecter électriquement les bus de distribution (4, 5).

3. Réseau (1) d'alimentation selon la revendication 1, **caractérisé en ce que**, par défaut, les contacteurs (100) sont configurés pour déconnecter électriquement les bus de distribution (4, 5).

4. Réseau (1) d'alimentation selon l'une des revendications précédentes, **caractérisé en ce que** des moyens de stockage d'énergie sont également montés sur les bus de distribution (4, 5).

5. Réseau (1) d'alimentation selon la revendication précédente, dans lequel les moyens de stockage d'énergie sont des batteries (6, 7) associées à des convertisseurs (60, 70).

6. Réseau (1) d'alimentation selon l'une des revendications précédentes, **caractérisé en ce que** les redresseurs (20a, 20b, 20c ; 30a, 30b, 30c) de chaque génératrice (2, 3) comprennent des contacteurs (10) au niveau de leur entrée et de leur sortie.

7. Réseau (1) d'alimentation selon l'une des revendications précédentes, **caractérisé en ce qu'**il comporte encore des contacteurs (10) au niveau de chaque charge électrique (C1, C2, C3, C4) à alimenter et de chaque stockeur d'énergie (6, 7).

8. Réseau (1) d'alimentation selon l'une des revendications précédentes, **caractérisé en ce qu'**il comprend une unité de commande centralisée des génératrices (2, 3) et des stockeurs d'énergie (6, 7).

9. Turbogénérateur d'aéronef **caractérisée en ce qu'**elle est équipée d'un réseau (1) d'alimentation selon l'une quelconque des revendications 1 à 8.

## Patentansprüche

1. Erzeugernetzwerk (1) für elektrische Leistung für ein Flugzeug, das mit einer Vielzahl von zu versorgenden elektrischen Ladungen (C1, C2, C3, C4) ausgestattet ist, wobei das Erzeugernetzwerk (1) mindestens zwei Generatoren (2, 3) umfasst, die konfiguriert sind, um Teil eines Turbogenerators des Flugzeugs zu sein und angepasst sind, eine Quelle elektrischer Leistung bereitzustellen, und jeweils zwei Statoren umfassen, wobei jeder Stator einem Gleichrichter (20a, 20b, 20c; 30a, 30b, 30c) zugeordnet sind, wobei die Statoren der Generatoren (2, 3) mit mindestens zwei Verteilungsbussen (4, 5) verbunden sind, die eingerichtet sind, um die Teilzahl von elektrischen Ladungen (C1, C2, C3, C4) zu versorgen, wobei das Erzeugernetzwerk Kontaktgeber (100) umfasst, die angepasst sind, die Verteilerbusses (4, 5) elektrisch miteinander zu verbinden oder voneinander zu trennen, wobei die Gleichrichter (20a, 20b, 20c; 30a, 30b, 30c) der Generatoren (2, 3) abwechselnd auf den Verteilerbussen (4, 5) angebracht sind.

2. Erzeugernetzwerk (1) nach Anspruch 1, **dadurch gekennzeichnet, dass** die Kontaktgeber (100) standardmäßig konfiguriert sind, um die Verteilerbusse (4, 5) elektrisch zu verbinden.

3. Erzeugernetzwerk (1) nach Anspruch 1, **dadurch gekennzeichnet, dass** die Kontaktgeber (100) standardmäßig konfiguriert sind, um die Verteilerbusse (4, 5) elektrisch zu trennen.

4. Erzeugernetzwerk (1) nach einem der vorstehenden Ansprüche, **dadurch gekennzeichnet, dass** Leistungsspeichermittel ebenfalls auf den Verteilerbussen (4, 5) angebracht sind.

5. Erzeugernetzwerk (1) nach dem vorstehenden Anspruch, **dadurch gekennzeichnet, dass** die Leistungsspeichermittel Batterien (6, 7) sind, die Wandlern (60, 70) zugeordnet sind.

6. Erzeugernetzwerk (1) nach einem der vorstehenden Ansprüche, **dadurch gekennzeichnet, dass** die Gleichrichter (20a, 20b, 20c; 30a, 30b, 30c) jedes Generators (2, 3) Kontaktgeber (10) in ihrem Eingang und an ihrem Ausgang umfassen.

7. Erzeugernetzwerk (1) nach einem der vorstehenden Ansprüche, **dadurch gekennzeichnet, dass** es auch Kontaktgeber (10) an jeder zu versorgenden elektrischen Ladung (C1, C2, C3, C4) und an jedem Leistungsspeicher (6, 7) umfasst.

8. Erzeugernetzwerk (1) nach einem der vorstehenden Ansprüche, **dadurch gekennzeichnet, dass** es eine zentralisierte Steuereinheit der Generatoren (2 3) und der Leistungsspeicher (6, 7) umfasst.

9. Turbogenerator eines Flugzeugs, **dadurch gekennzeichnet, dass** es mit einem Erzeugernetzwerk nach einem Ansprüche 1 bis 8 ausgestattet ist.

## Claims

1. An electrical energy supply network (1) of an aircraft provided with a plurality of electrical loads (C1, C2, C3, C4) to be supplied, said supply network (1) comprising at least two generators (2, 3) configured to be part of a turbogenerator of the aircraft and adapted to provide an electrical energy source comprising, each, at least one stator associated with a rectifier (20a, 20b, 20c; 30a, 30b, 30c), the stators of the generators (2, 3) being connected to at least two distribution buses (4, 5) arranged to supply the plurality of electrical loads (C1, C2, C3, C4), the electrical energy supply network comprising contactors (100) adapted to electrically connect or disconnect the distribution buses (4, 5) from each other, the rectifiers (20a, 20b, 20c; 30a, 30b, 30c) of the generators (2, 3) being mounted alternately on the distribution buses (4, 5).

2. The supply network (1) according to claim 1, **characterized in that**, by default, the contactors (100) are configured to electrically connect the distribution buses (4, 5).

3. The supply network (1) according to claim 1, **characterized in that**, by default, the contactors (100) are configured to electrically disconnect the distribution buses (4, 5).

4. The supply network (1) according to one of the preceding claims, **characterized in that** energy storage means are also mounted on the distribution buses (4, 5).

5. The supply network (1) according to the preceding claim, wherein the energy storage means are batteries (6, 7) associated with converters (60, 70).

6. The supply network (1) according to one of the preceding claims, **characterized in that** the rectifiers (20a, 20b, 20c; 30a, 30b, 30c) of each generator (2, 3) comprise contactors (10) at the level of their input and their output.

7. The supply network (1) according to one of the preceding claims, **characterized in that** it also comprises contactors (10) at the level of each electrical load (C1, C2, C3, C4) to be supplied and of each energy storage device (6, 7).

8. The supply network (1) according to one of the preceding claims, **characterized in that** it comprises a centralized control unit for the generators (2, 3) and the energy storage devices (6, 7).

9. An aircraft turbogenerator, **characterized in that** it is equipped with a supply network (1) according to any one of claims 1 to 8.
